# EUROPÄISCHE PATENTSCHRIFT

(11) **EP 2 234 863 B1**
(45) Veröffentlichungstag und Bekanntmachung des Hinweises auf die Patenterteilung: **14.08.2013**
(21) Anmeldenummer: 08861000.1
(22) Anmeldetag: 11.11.2008
(51) Int. Cl.: B62D 5/04, B62D 6/00, B62K 21/00, B60W 30/02, B60W 40/06, B60W 40/10

(54) **MOTORRAD MIT EINEM BREMS- UND LENKASSISTENT**
MOTORCYCLE HAVING A BRAKING AND STEERING ASSISTANCE SYSTEM
MOTOCYCLE ÉQUIPÉ D'UNE ASSISTANCE AU FREINAGE ET DE LA DIRECTION ASSISTÉE

(30) Priorität: 19.12.2007 DE 102007061114
(43) Veröffentlichungstag der Anmeldung: 06.10.2010
(73) Patentinhaber: Robert Bosch GmbH, 70442 Stuttgart (DE)
(72) Erfinder: ZIMMERMANN, Marc, 75175 Pforzheim (DE); GEORGI, Andreas, 71701 Schwieberdingen (DE)
(86) Internationale Anmeldenummer: PCT/EP2008/065279
(87) Internationale Veröffentlichungsnummer: WO 2009/077264

(56) Entgegenhaltungen:
- EP-A- 1 775 188
- EP-A- 1 950 113

## Beschreibung

### Stand der Technik

Die Erfindung betrifft eine Vorrichtung zum Unterstützen eines Zweiradfahrers bei Kurvenfahrten gemäß dem Oberbegriff des Patentanspruchs 1, sowie ein entsprechendes Verfahren gemäß dem Oberbegriffe Patentanspruchs 9.

Unfallforschungen haben ergeben, dass Motorradunfälle häufig durch das Fahren mit überhöhter Geschwindigkeit in Kurven und/oder durch inadäquate Kurventechnik des Zweiradfahrers entstehen. Eine typische Reaktion eines Motorradfahrers, sobald er bemerkt, dass er die Kurve (subjektiv) zu schnell angefahren hat, besteht darin, die Räder zu überbremsen. Dadurch verliert insbesondere das Vorderrad die Seitenführungskraft und das Fahrzeug stürzt. Eine andere typische Reaktion eines durchschnittlichen Fahrers besteht im Öffnen der Lenkung, um so das Zweirad aufzurichten und eine Bremsung einzuleiten. Dies erhöht jedoch den Kurvenradius, und es kommt häufig zur Kollision mit Objekten im Seitenraum der Straße oder mit entgegenkommenden Fahrzeugen.

Ein solches System ist im Dokument EP 1 775 188, im Einklang mit den Merkmalen der jeweiligen Oberbegriffe vom Vorrichtungasnspruch 1 und vom Verfahrensanspruch 8, offenbart.

### Offenbarung der Erfindung

Es ist daher die Aufgabe der vorliegenden Erfindung, ein System für Motorrader zu schaffen, das den Fahrer bei dynamischen Kurvenfahrten unterstützt.

Gelöst wird diese Aufgabe gemäß der Erfindung durch die im Patenanspruch 1 sowie im Patentanspruch 9 angegebenen Merkmale. Weitere Ausgestaltungen der Erfindung ergeben sich aus den Unteransprüchen.

Ein wesentlicher Aspekt der Erfindung besteht darin, im Motorrad sowohl einen Bremsassistenten, der das Überbremsen der Räder verhindert, als auch einen Lenkassistenten vorzusehen, der dem bei einer Bremsung auftretenden Aufstellmoment entgegen wirkt. Der Bremsassistent - darunter wird hier ein in einem Steuergerät hinterlegter Algorithmus verstanden - ermittelt aus verschiedenen Fahr-Zustandsgrößen eine maximale Bremskraft oder eine die Bremskraft repräsentierende Größe (z.B. ein Bremsmoment), die in der vorgegebenen Fahrsituation maximal ausgeübt werden sollte. Sofern der Fahrer durch Betätigung der Radbremsen eine größere Bremskraft wünscht, wird diese auf den Maximalwert begrenzt.

Eine während einer Kurvenfahrt durchgeführte Bremsung führt aufgrund der geometrischen Verhältnisse zu einem Lenkmoment in Richtung der Kurveninnenseite. Dieses aus den Bremskräften resultierende Lenkmoment verursacht am Fahrzeug ein aufrichtendes Moment (Aufstellmoment). Um die Aufstelltendenz zumindest abzuschwächen ist daher ein Lenkassistent vorgesehen, der in Abhängigkeit von der Stärke der Bremsung einen Lenkimpuls auf die Lenkung ausübt. Der Lenkimpuls ist dabei nach Kurvenaußen gerichtet ist und wirkt dem Aufstellmoment entgegen. Das Fahrzeug kann somit in einer Kurvenfahrt wesentlich besser unter Kontrolle gehalten und die Gefahr eines Unfalls verringert werden.

Der Eingriff des Lenkaktuators ist vorzugsweise derart ausgelegt, das er vom Fahrer übersteuert werden kann.

Der Bremsassistent berechnet den maximalen Bremswert vorzugsweise zumindest auf Grundlage der Schräglage α des Fahrzeugs und eines Reibwerte zwischen Rad und Fahrbahn. Die Schräglage des Fahrzeugs kann mittels eines Schräglagensensors gemessen oder geschätzt werden. Hierzu sind aus dem Stand der Technik eine Vielzahl verschiedener Möglichkeiten bekannt.

Als Reibwert kann ein fester Wert angesetzt werden. Es können aber auch verschiedene Werte für unterschiedliche Fahrbahnbedingungen, wie z.B. trockene oder nasse Fahrbahn, verwendet werden. Alternativ kann der Reibwert auch modellbasiert geschätzt oder aus anderen Zustandsgrößen berechnet werden. Das erfindungsgemäße System ist vorzugsweise derart ausgelegt, dass es für jedes Rad eine individuelle maximale Bremskraft bestimmt. Darüber hinaus ist es vorzugsweise derart ausgelegt, dass es das vom Fahrer gewünschte Bremsmoment (bzw. den Verzögerungswunsch) möglichst vollständig auf die Radbremsen der beiden Räder verteilt. Sollte beispielsweise die zulässige Bremskraft an einem Rad überschritten sein, wird der darüber hinaus gehende Bremswunsch vorzugsweise auf das andere Rad verteilt, sofern dieses noch Bremsmoment aufnehmen kann. Dieser Prozess wird vorzugsweise von einem Steuergerät kontrolliert, das mit geeigneten Aktuatoren, wie z.B. Ventilen oder Elektromotoren der Bremsanlage verbunden ist.

Der Fahrer-Bremswunsch wird vorzugsweise mittels Sensoren gemessen, die z.B. als Kraft-, Druck- oder Wegsensoren realisiert sind und eine den Fahrer-Bremswunsch repräsentierende Größe messen.

Der erfindungsgemäße Lenkaktuator umfasst vorzugsweise einen Servomotor wie z.B. einen Elektromotor, der an die Lenkung des Motorrades gekoppelt ist.

Gemäß einer bevorzugten Ausführungsform der Erfindung umfasst der Lenkassistent einen Regler (Algorithmus), der die Schräglage des Zweirades regelt. Als Stellglied der Regelung kann wahlweise der Lenkaktuator und/oder eine Fahrzeugbremse genutzt werden.

Das erfindungsgemäße System kann mit einem Navigationsgerät verbunden sein, das Informationen über die Art einer Kurve, insbesondere deren Kurvenradius, bereitstellt. Diese Informationen werden vorzugsweise genutzt, um die maximale Bremskraft bzw. die äquivalente Größe genauer zu berechnen.

### Kurze Beschreibung der Zeichnungen

Die Erfindung wird nachstehend anhand der beigefügten Zeichnungen beispielhaft näher erläutert. Es zeigen:
- Fig. 1: eine Rückansicht eines Motorrads mit den wichtigsten Kräften und Momenten in einer Kurvenfahrt;
- Fig. 2: ein schematisches Blockschaltbild eines Systems zum Unterstützen eines Fahrers während einer Kurvenfahrt; und
- Fig. 3: die wesentlichen Verfahrensschritte eines Verfahrens zum Unterstützen eines Fahrers bei einer Kurvenfahrt

### Ausführungsformen der Erfindung

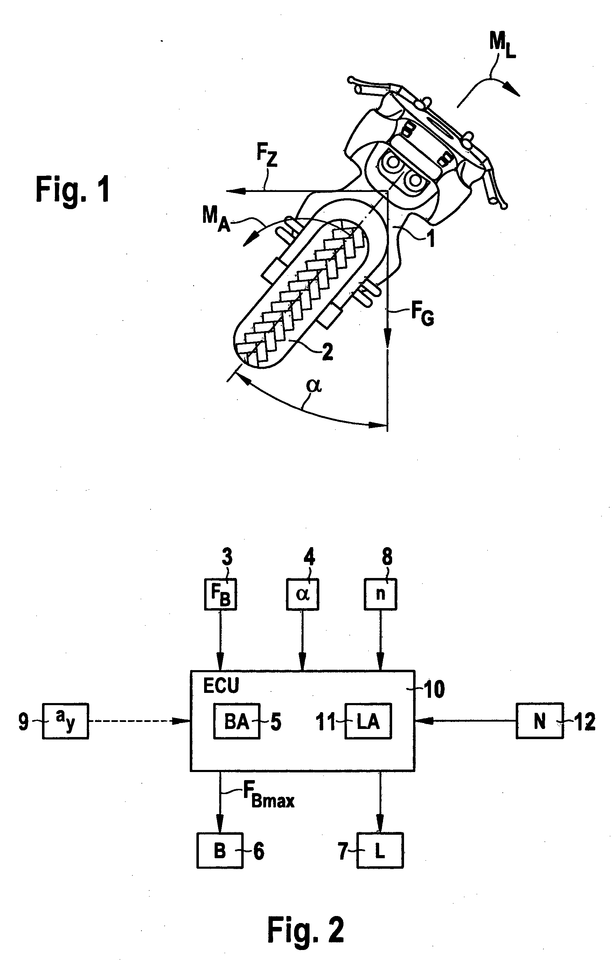

Fig. 1 zeigt eine schematische Rückansicht auf ein Zweirad, in der die am Zweirad wirkenden Kräfte und Momente eingezeichnet sind. Dabei ist F_{G} die Gewichtskraft, F_{Z} die Zentrifugalkraft, M_{A} das Aufstellmoment und M_{L} das Lenkmoment.

Fig. 2 zeigt die wesentlichen Komponenten eines Systems zur Unterstützung eines Fahrers bei Kurvenfahrten. Dieses System umfasst im Wesentlichen ein Steuergerät 10 mit einem Brems- 5 und einem Lenkassistenten 11. Dabei handelt es sich um entsprechende Algorithmen, die im Steuergerät 10 hinterlegt sind. Am Steuergerät 10 sind mehrere Sensoren 3,4,8,9,12 angeschlossen, die zur Überwachung der aktuellen Fahrsituation dienen. Wahlweise können auch mehr oder weniger Sensoren vorgesehen sein. Das System kann über die radbremsen 6 und die Lenkung 7 in den Fahrbetrieb eingreifen.

Das dargestellte System ist derart ausgelegt, dass es bei Kurvenfahrten, in denen der Fahrer die Bremse 6 betätigt, die Bremskraft bzw. eine äquivalente größe auf einen Maximalwert begrenzt und außerdem einen Lenkimpuls auf die Lenkung 7 ausgeübt wird, der das durch die Bremsung verursachte Aufstellmoment M_{A} wenigstens teilweise kompensiert.

Zur Überwachung der aktuellen Fahrsituation in Bezug aufeine Kurvenfahrt und das Betätigen der Bremsanlage 6 sind im vorliegenden Ausführungsbeisphl ein Bremskraftsensor 3 und ein Schräglagensensor 4 vorgesehen. Die Sensorsignate dieser Sensoren 3,4 werden vom Bremsassistenz-Algorithmus 5 verarbeitet. Der Fahrzustand "Kurvenfahrt" könnte alternativ auch aus anderen physikalische Größen, wie z.B. der Querbeschleunigung ay (Querbeschleunigungssensor 9) oder mittels einer anderen Sensorik ermittelt werden. Anstelle eines Bremskraftsensors 3 kann auch ein Drucksensor oder ein anderer Sensor eingesetzt werden, der in der Lage ist, eine Bremsbetätigung zu erfassen.

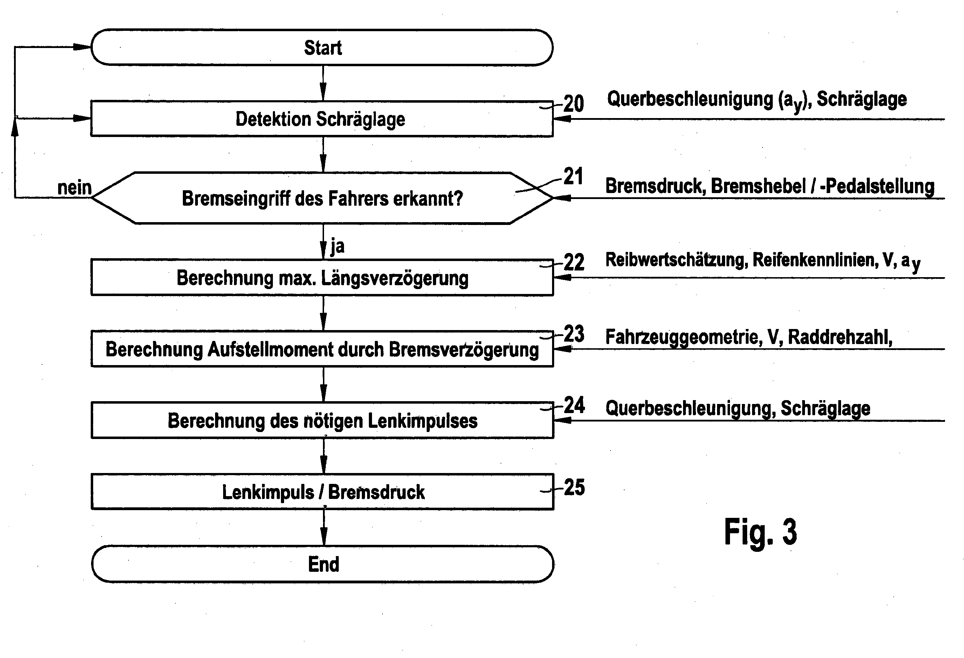

Fig. 3 zeigt in den Schritten 20 und 21 die Detektion der Schräglage und eines Bremseingriffs des Fahrers. Wird in Schritt 21 eine Kurvenfahrt mit Bremsbetätigung erkannt, wird in Schritt 22 ein Wert für eine maximale Bremskraft oder eine entsprechende Größe, wie z.B. eine maximale Verzögerung, ermittelt, die nicht überschritten werden sollte. Dieser Wert wird vorzugsweise für beide Räder individuell berechnet.

Der Bremsassistent 5 berechnet den Maximalwert vorzugsweise als funktion der Schräglage des Motorrads 1 und des Reibwerte zwischen Rad und Fahrbahn. Es gilt somit: F_{B} = f(α,µ). Der Reibwert wird vorzugsweise mittels bekannter Modelle geschätzt. Wahlweise könnte der Maximalwert auch aus Kennlinien ausgewiesen werden, die im System hinterlegt sind.

Zusätzlich können weitere physikalische Größen, wie z.B. die Fahrzeuggeschwindigkeit und/oder die Querbeschleunigung a_{y}, etc. herangezogen werden, um das Ergebnis zu verbessern.

Sofern die vom Fahrer gewünschte Verzögerung größer ist als die berechnete maximale Bremskraft, wird die Bremskraft auf den Maximalwert begrenzt. Zu diesem Zweck kann das Steuergerät 10 verschiedene Aktuatoren, wie z.B. Ventile der Bremsanlage 6 ansteuern.

In Schritt 23 wird nun das Aufstellmoment bestimmt, das durch Bremsung auf das Fahrzeug ausgeübt wird. Das Aufstellmoment M_{A} ist dabei insbesondere abhängig von der Fahrzeuggeometrie, der Geschwindigkeit und der aktuellen Schräglage.

In Schritt 24 wird schließlich der Lenkimpuls berechnet, der zur Kompensation des Aufstellmoments M_{A} auf die Lenkung ausgeübt werden soll. Der Lenkimpuls ist dabei insbesondere abhängig von der Querbeschleunigung, Schräglage und der Bremsverzögerung des Fahrzeugs, sowie gegebenenfalls weiterer Größen.

In Schritt 25 erfolgen schließlich der Lenkeingriff und gegebenenfalls auch die Begrenzung des Bremsdrucks. Der Lenkeingriff ist dabei so ausgelegt, dass er vom Fahrer übersteuert werden kann.

Das vorstehend beschriebene System unterstützt den Fahrer somit darin, das Fahrzeug kontrolliert in der Kurve zu halten.

## Patentansprüche

1. Vorrichtung zum Unterstützen eines Zweirad-Fahrers bei Kurvenfahrten, enthaltend:
- Mittel (10,3,4) zur Überwachung des Fahrzustandes zumindest in Bezug auf eine Kurvenfahrt und das Betätigen der Fahrzeugbremse,
- eine Einheit (10, 5), die eine maximale Bremskraft (F_{Bmax}) oder einen Maximalwert für eine äquivalente Größe bestimmt, und die die an den Radbremsen (6) ausgeübte Bremskraft bzw. die äquivalente Größe auf den Maximalwert begrenzt, und
- einen Lenkaktuator (10,7), der einen Lenkimpuls auf die Lenkung (7) des Zweirades (1) ausübt, der einem durch die Bremsung verursachten Aufstellmoment (M_{A}) entgegen wirkt,
**dadurch gekennzeichnet, dass** die Einheit (10,5) die maximale Bremskraft (F_{Bmax}) bzw. die äquivalente Größe auf Grundlage des Schräglagenwinkels (α) und des Reibwertes (µ) zwischen Reifen und Fahrbahn bestimmt.

2. Vorrichtung nach Anspruch 1, **dadurch gekennzeichnet, dass** der Lenkaktuator (10,7) einen Lenkimpuls auf die Lenkung (7) ausübt, der nach Kurvenaußen gerichtet ist.

3. Vorrichtung nach einem der vorhergehenden Ansprüche, **dadurch gekennzeichnet, dass** die Einheit (10) das vom Fahrer gewünschte Bremsmoment abhängig von der Fahrsituation auf das Vorder- und Hinterrad (2) des Zweirades (1) verteilt.

4. Vorrichtung nach einem der vorhergehenden Ansprüche, **dadurch gekennzeichnet, dass** der Lenkaktuator (7) einen Elektromotor umfasst.

5. Vorrichtung nach einem der vorhergehenden Ansprüche, **dadurch gekennzeichnet, dass** ein Regler (11) vorgesehen ist, der die Schräglage (α) des Zweirades (1) regelt.

6. Vorrichtung nach einem der vorhergehenden Ansprüche, **dadurch gekennzeichnet, dass** ein Sensor (3) zum Detektieren der vom Fahrer gewünschten Bremskraft bzw. einer entsprechenden Größe vorgesehen ist.

7. Vorrichtung nach einem der vorhergehenden Ansprüche, **dadurch gekennzeichnet, dass** die Einheit (10) mit einem Navigationssystem verbunden ist und die vom Navigationssystem gelieferten Informationen zur Bestimmung der maximalen Bremskraft (F_{Bmax}) nutzt.

8. Verfahren zum Unterstützen eines Zweiradfahrers bei Kurvenfahrten, enthaltend folgende Schritte:
- Überwachen des Fahrzustandes zumindest in Bezug auf eine Kurvenfahrt und das Betätigen der Fahrzeugbremse,
- Bestimmen eines maximalen Bremswertes (F_{Bmax}),
- Begrenzen der an den Radbremsen (6) ausgeübten Bremskraft auf den Maximalwert (F_{Bmax}), sofern die vom Fahrer gewünschte Bremskraft den Maximalwert (F_{Bmax}) übersteigt,
- Bestimmen eines Lenkimpulses, der das durch die Bremsung verursachte Aufstellmoment (M_{A}) wenigstens teilweise kompensiert, und
- Ausüben des Lenkimpulses auf die Lenkung (7) des Zweirades (1),
**dadurch gekennzeichnet, dass** der maximale Bremswert (F_{Bmax}) auf Grundlage des Schräglagenwinkels (α) und des Reibwertes (µ) zwischen Reifen und Fahrbahn bestimmt wird.

## Claims

1. Device for assisting a rider of a two-wheeler when cornering, containing:
- means (10, 3, 4) for monitoring the riding condition at least with respect to cornering and the actuation of the vehicle brake,
- a unit (10, 5) which determines a maximum braking force (F_{Bmax}) or a maximum value for an equivalent variable, and which limits the braking force exerted on the wheel brakes (6) or the equivalent variable to the maximum value, and
- a steering actuator (10, 7) which exerts a steering pulse on the steering system (7) of the two-wheeler (1), said steering pulse counteracting a righting moment (M_{A}) caused by the braking,
**characterized in that** the unit (10, 5) determines the maximum braking force (F_{Bmax}) or the equivalent variable on the basis of the tilt angle (α) and of the coefficient of friction (µ) between tyres and carriageway.

2. Device according to Claim 1, **characterized in that** the steering actuator (10, 7) exerts a steering pulse on the steering system (7), said steering pulse being directed towards the outside of the curve.

3. Device according to either of the preceding claims, **characterized in that** the unit (10) distributes the braking moment desired by the rider to the front wheel and rear wheel (2) of the two-wheeler (1) depending on the riding situation.

4. Device according to one of the preceding claims, **characterized in that** the steering actuator (7) comprises an electric motor.

5. Device according to one of the preceding claims, **characterized in that** a regulator (11) is provided which regulates the tilt (α) of the two-wheeler (1) .

6. Device according to one of the preceding claims, **characterized in that** a sensor (3) is provided for detecting the braking force desired by the rider or a corresponding variable.

7. Device according to one of the preceding claims, **characterized in that** the unit (10) is connected to a navigation system and uses the information supplied by the navigation system to determine the maximum braking force (F_{Bmax}).

8. Method for assisting the rider of a two-wheeler when cornering, containing the following steps:
- monitoring the riding condition at least with regard to cornering and the actuation of the vehicle brake,
- determining a maximum braking value (F_{Bmax}),
- limiting the braking force exerted on the wheel brakes (6) to the maximum value (F_{Bmax}) if the braking force desired by the raider exceeds the maximum value (F_{Bmax}),
- determining a steering pulse ,which at least partially compensates for the righting moment (M_{A}) caused by the braking, and
- exerting the steering pulse on the steering system (7) of the two-wheeler (1),
**characterized in that** the maximum braking value (F_{Bmax}) is determined on the basis of the tilt angle (α) and of the coefficient of friction (µ) between tyres and carriageway.

## Revendications

1. Dispositif d'assistance d'un conducteur de deux-roues dans des conduites en virages, contenant :
- des moyens (10, 3, 4) de surveillance de l'état de conduite au moins par rapport à une conduite en virages et à l'actionnement du frein de véhicule ;
- une unité (10, 5) définissant une force de freinage maximale (F_{Bmax}) ou une valeur maximale pour une grandeur équivalente et limitant à la valeur maximale la force de freinage et/ou la grandeur équivalente s'exerçant au niveau des freins de roue (6) ; et
- un actionneur de direction (10, 7) exerçant une impulsion de direction sur la direction (7) du deux-roues (1) agissant à l'encontre d'un couple appliqué (M_{A}) provoqué par le freinage ;
**caractérisé en ce que** l'unité (10, 5) définit la force de freinage maximale (F_{Bmax}) et/ou la grandeur équivalente en fonction de l'angle de position oblique (α) et de la valeur de frottement (µ) détectée entre les pneumatiques et le couloir de conduite.

2. Dispositif selon la revendication 1, **caractérisé en ce que** l'actionneur de direction (10, 7) exerce une impulsion de direction sur la direction (7) orientée vers l'extérieur du virage.

3. Dispositif selon l'une quelconque des revendications précédentes, **caractérisé en ce que** l'unité (10) répartit le couple de freinage souhaité par le conducteur sur la roue avant et arrière (2) du deux-roues (1) en fonction de la situation de conduite.

4. Dispositif selon l'une quelconque des revendications précédentes, **caractérisé en ce que** l'actionneur de direction (7) comprend un moteur électrique.

5. Dispositif selon l'une quelconque des revendications précédentes, **caractérisé en ce qu'**un régulateur (11) est prévu réglant la position oblique (α) du deux-roues (1).

6. Dispositif selon l'une quelconque des revendications précédentes, **caractérisé en ce qu'**un capteur (3) est prévu pour détecter la force de freinage et/ou une grandeur correspondante souhaitée par le conducteur.

7. Dispositif selon l'une quelconque des revendications précédentes,' **caractérisé en ce que** l'unité (10) est reliée à un système de navigation et utilise les informations fournies par le système de navigation pour déterminer la force de freinage maximale (F_{Bmax}).

8. Procédé d'assistance d'un conducteur de deux-roues lors des conduites en virages, contenant les étapes suivantes :
- surveillance de l'état de conduite au moins par rapport à une conduite en virages et à l'actionnement du frein de véhicule ;
- détermination d'une valeur de freinage maximale (F_{Bmax}) ;
- limitation de la force de freinage exercée au niveau des freins de roue (6) à la valeur maximale (F_{Bmax}) dès lors que la force de freinage souhaitée par le conducteur dépasse la valeur maximale (F_{Bmax}) ;
- détermination d'une impulsion de direction compensant au moins en partie le couple appliqué (M_{A}) provoqué par le freinage ; et
- application de l'impulsion de direction sur la direction (7) du deux-roues (1) ;
**caractérisé en ce que** la force de freinage maximale (F_{Bmax}) est définie en fonction de l'angle de position oblique (α) et de la valeur de frottement (µ) détectée entre les pneumatiques et le couloir de conduite.
